# EUROPÄISCHE PATENTANMELDUNG

(11) **EP 0 602 406 A2**
(43) Veröffentlichungstag der Anmeldung: **22.06.1994**
(21) Anmeldenummer: 93118634.0
(22) Anmeldetag: 19.11.1993
(51) Int. Cl.: A47C 3/30, F16C 33/20, F16C 29/02

(54) **Führungsbuchse, insbesondere für längenverstellbare Stuhl-Säule und Stuhl-Säule mit derartiger Führungsbuchse**

(30) Priorität: 16.12.1992 DE 4242475
(71) Anmelder: SUSPA COMPART Aktiengesellschaft, D-90518 Altdorf (DE)
(72) Erfinder: Bauer, Hans Jürgen, D-90518 Altdorf (DE)
(74) Vertreter: Rau, Manfred, Dr. Dipl.-Ing.

(57) **Zusammenfassung**

Eine Führungsbuchse (6) weist einen metallischen Armierungsring (28) auf. Sie ist mit einer Innenbeschichtung (29), die mit Führungsflächen (40) versehen ist, und einer Außenbeschichtung (31) versehen, mittels derer sie sich gegen eine Innenseite eines Standrohres abstützt. Die radiale Dicke (h) der Innenbeschichtung (29) ist klein gegenüber der radialen Gesamtdicke (k) der Führungsbuchse (6) und der radialen Dicke (i) der Außenbeschichtung (31). Innenbeschichtung (29) und Außenbeschichtung (31) bestehen aus Kunststoff.

## Beschreibung

Die Erfindung betrifft eine Führungsbuchse nach dem Oberbegriff des Anspruches 1 und eine Stuhl-Säule nach dem Oberbegriff des Anspruches 8.

Es ist bekannt, in längenverstellbaren Stuhl-Säulen Führungsbuchsen einzusetzen, gegen die sich rohrförmige Längenverstellelemente radial geführt aber axial verschiebbar abstützen oder gegen die ein Führungsrohr radial abgestützt ist, das das Längenverstellelement aufnimmt und zur sogenannten Tiefenfederung dient. Derartige Führungsbuchsen bestehen aus einem Kunststoff mit guten Gleiteigenschaften gegenüber dem Metall, üblicherweise Stahl, des jeweils verschiebbar in ihnen geführten Rohres. Üblicherweise haben derartige Führungsbuchsen eine relativ große radiale Dicke, da der Durchmesser des Rohres deutlich kleiner ist als der Durchmesser des Standrohres. Die Führungsbuchse soll absolut spielfrei und radial fest mit leichter Pressung im Standrohr angeordnet sein. Wenn ihr Außendurchmesser bezogen auf den Innendurchmesser des Standrohres ein zu großes Übermaß aufweist, dann wird der Innendurchmesser der mindestens einen Führungsfläche der Führungsbuchse verändert, was sich nachteilig auf die Führungseigenschaften gegenüber dem Rohr auswirkt.

Der Erfindung liegt die Aufgabe zugrunde, eine Führungsbuchse der gattungsgemäßen Art so auszugestalten, daß der Innendurchmesser der mindestens einen Führungsfläche unabhängig ist von einem Übermaß der Führungsbuchse gegenüber der Innenseite des Standrohres, wobei andererseits sichergestellt sein soll, daß die Führungbuchse im Standrohr radial fest angeordnet werden kann. Weiterhin soll eine Stuhlsäule mit einer derartigen Führungsbuchse geschaffen werden.

Die vorstehend genannte Aufgabe wird erfindungsgemäß bei einer Führungsbuchse nach dem Oberbegriff des Anspruches 1 durch die Merkmale im Kennzeichnungsteil des Anspruches 1 gelöst. Unabhängig davon, wie groß das Übermaß der Führungsbuchse gegenüber der Innenseite des Standrohres ist, wirken sich von dort herkommende Zusammenpressungen der Führungsbuchse nicht auf die Lage der mindestens einen Führungsfläche aus. Deren Innendurchmesser wird also nicht verändert. Der Armierungsring nimmt diese Pressungen auf. Bei dem Rohr, das in der Führungsbuchse geführt wird, kann es sich um das Gehäuse einer Gasfeder oder ein dieses zusätzlich dicht umgebendes Rohr handeln. Es kann sich darüber hinaus um ein zusätzliches Führungsrohr handeln, das bei Vorhandensein einer Tiefenfederung eingesetzt wird. Das Längenverstellelement kann - wie ausgeführt - eine längenverstellbare Gasfeder, aber auch ein hydro-pneumatisches Längenverstellelement mit dem gleichen Grundaufbau wie eine Gasfeder sein. Dies gilt insbesondere, wenn eine zusätzliche Tiefenfederung vorgesehen ist.

Die Ansprüche 2 bis 7 geben vorteilhafte und im wesentlichen erfinderische Ausgestaltungen der Lösung nach Anspruch 1 an. Durch die Maßnahmen nach Anspruch 2 wird erreicht, daß auf die Außenbeschichtung ausgeübte Verdichtungen gleichmäßig auf den Armierungsring wirken. Durch die Weiterbildung nach Anspruch 3 wird erreicht, daß Materialverformungen der Außenbeschichtung nicht über die Stirnseiten des Armierungsringes zur Innenbeschichtung weiterfließen könen. Die nach Anspruch 4 vorgesehenen Kammern bewirken, daß durch Zusammenpressung der Außenbeschichtung erfolgende Materialverformungen in die Kammern ausweichen können.

Die Ansprüche 8 und folgende geben eine Stuhl-Säule mit einer Führungsbuchse nach der Erfindung an.

Weitere Vorteile, Merkmale und Einzelheiten der Erfindung ergeben sich aus der nachfolgenden Beschreibung eines Ausführungsbeispieles anhand der Zeichnung. Es zeigt
- Fig. 1: eine Stuhl-Säule im Längs-Querschnitt,
- Fig. 2: eine Führungsbuchse aus der Stuhl-Säule nach Fig. 1 im Längs-Schnitt in vergrößerter Darstellung,
- Fig. 3: eine Draufsicht auf eine Stirnseite der Führungsbuchse gemäß dem Sichtpfeil III in Fig. 2,
- Fig. 4: eine Draufsicht auf die andere Stirnseite der Führungsbuchse gemäß dem Sichtpfeil IV in Fig. 2 und
- Fig. 5: eine Teildarstellung aus Fig. 2 in vergrößertem Maßstab.

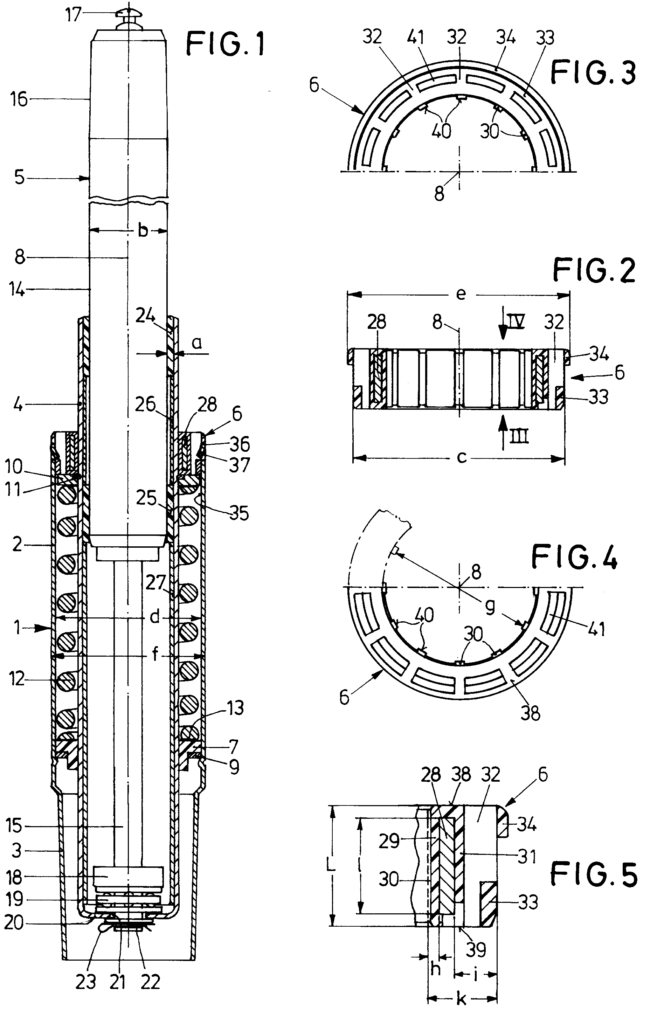

Die in Fig. 1 dargestellte längenverstellbare Stuhl-Säule weist ein äußeres Standrohr 1 auf, das einen oberen zylindrischen Abschnitt 2 aufweist, an den sich ein unterer konischer Abschnitt 3 anschließt, der in üblicher Weise dazu dient, in eine entsprechende Aufnahme eines Stuhl-Fußgestells eingesetzt zu werden. In dem Standrohr 1 ist ein Führungsrohr 4 für eine als Längen-Verstellelement dienende längenverstellbare Gasfeder 5 angeordnet. Das Führungsrohr 4 ist im Standrohr 1 in einer oberen Führungsbuchse 6, die am oberen offenen Ende des Standrohres 1 angeordnet ist, und einem unteren Führungsring 7, der im Übergangsbereich zwischen dem zylindrischen Abschnitt 2 und dem konischen Abschnitt 3 angeordnet ist, in Richtung der gemeinsamen Mittel-Längs-Achse 8 verschiebbar gelagert. Der untere Führungsring 7 besteht aus einem Kunststoff mit guten Gleiteigenschaften gegenüber dem Metall, beispielsweise Stahl, des Führungsrohres 4. Der Führungsring 7 ist mittels eines Befestigungsrings 9 im Standrohr 1 in Richtung der Mittel-Längs-Achse 8 und zwar zumindest in Richtung zum konischen Abschnitt 3 hin festgelegt. Er liegt radial fest zum Standrohr 1, so daß das Führungsrohr 4 radial weitgehend spielfrei in ihm geführt wird.

Am Führungsrohr 4 ist ein Anschlagring 10 mittels eines Sicherungsringes 11 festgelegt. In dem Raum zwischen dem Führungsrohr 4 und dem Standrohr 1 ist eine vorgespannte Schrauben-Druckfeder 12 angeordnet, die sich einerseits gegen den Anschlagring 10 und andererseits gegen eine Anschlagfläche 13 des unteren Führungsringes 7 abstützt, so daß in unbelastetem Zustand das Führungsrohr 4 so weit aus dem Standrohr 1 hinausgeschoben wird, wie Fig. 1 erkennen läßt, wobei der Anschlagring 10 gegen die obere Führungsbuchse 6 anliegt.

Die längenverstellbare Gasfeder 5 ist im einzelnen so aufgebaut und im Führungsrohr 4 angeordnet, wie es im einzelnen in der EP 0 133 524 B (entsprechend US 4 979 718) dargestellt und beschrieben ist. Sie weist ein gegebenenfalls durch ein zusätzliches Rohr gebildetes Gehäuse 14 auf, aus dessen einer Seite - nach unten - eine Kolbenstange 15 herausgeführt ist. Am oberen Ende des Gehäuses 14 bzw. des dieses aufnehmenden zusätzlichen Rohres ist ein sich konisch verjüngender Befestigungsabschnitt 16 ausgebildet, aus dessen oberem Ende ein Betätigungsstift 17 herausragt, der zur Betätigung eines im Gehäuse 14 befindlichen Ventils dient, mittels dessen in bekannter und üblicher Weise Längenverstellungen der Gasfeder 5 gesteuert werden. Die Kolbenstange 15 ist im Bereich ihres freien Endes über einen Anschlagpuffer 18 und ein Axial-Wälzlager 19 am Boden 20 des Führungsrohres 4 abgestützt. Ein durch eine Öffnung 21 im Boden 20 ragender Zapfen 22 der Kolbenstange 15 ist mittels eines Sicherungselementes 23 an der Unterseite des Bodens 20 festgelegt, so daß die Kolbenstange 15 in Richtung der Mittel-Längs-Achse 8 unverschiebbar festgelegt ist.

Das Gehäuse 14 bzw. das zusätzliche Rohr der Gasfeder 5 ist in zwei Gleitbuchsen 24, 25 in Richtung der Achsen 8 im Führungsrohr 4 verschiebbar geführt. Diese sind durch Distanzhülsen 26, 27 gegeneinander und gegenüber dem Boden 20 des Führungsrohres 4 in Richtung der Achse 8 abgestützt. Die Gleitbuchsen 24, 25 haben eine radiale Dicke a, die klein im Verhältnis zum Durchmesser b des Gehäuses 14 bzw. des zusätzlichen Rohres der Gasfeder 5 ist. Beispielsweise ist der Durchmesser b mindestens 10 x so groß wie die radiale Dicke a.

Wie insbesondere aus den Fig. 2 bis 5 hervorgeht, weist die obere Führungsbuchse 6 einen ringzylindrischen Armierungsring 28 aus Stahl auf, dessen Länge 1 in Richtung der Achse 8 sich über einen wesentlichen Teil der Länge L der Führungsbuchse 6 erstreckt. Dieser Armierungsring 28 kann aus einem Stahl-Rohr hergestellt sein; er kann aber auch aus einem Blechstreifen gebogen sein, dessen Stirnseiten gegeneinanderliegen, so daß dieser Armierungsring aufgrund von außen auf ihn wirkender radial gerichteter Kräfte nicht zusammendrückbar ist. Dieser Armierungsring 28 weist auf seiner Innenseite eine Innenbeschichtung 29 auf, die mit parallel zur Achse 8 verlaufenden und zu dieser hin radial vorspringenden Führungsstegen 30 versehen ist. Der Armierungsring 28 ist weiterhin mit einer Außenbeschichtung 31 versehen, von der radial nach außen Stützrippen 32 hervorragen, die parallel zur Achse 8 verlaufen. Die Stützrippen 32 sind in ihrem unteren, dem Anschlagring 10 benachbarten Bereich mit einem äußeren Stützring 33 miteinander verbunden, der konzentrisch zur Achse 8 angeordnet ist. Die Stützrippen 32 sind weiterhin an ihrem dem Stützring 33 entgegengesetzten oberen Ende und auf ihrer Außenseite mit einem Anlagering 34 umgeben. Der Außendurchmesser c des Stützrings 33 ist gleich oder innerhalb eines Toleranzmaßes geringfügig größer als der Innendurchmesser d des zylindrischen Abschnitts 2 des Standrohres 1. Gleiches gilt bezüglich der Stützrippen 32 zwischen dem Stützring 33 und dem Anlagering 34. Der Anlagering 34 selber weist einen Außendurchmesser e auf, der etwa dem Außendurchmesser f des zylindrischen Abschnitts 2 des Standrohres 1 entspricht. Wenn die obere Führungsbuchse 6 in das offene Ende des zylindrischen Abschnitts 2 des Standrohres 1 eingeschoben wird, dann liegen der Stützring 33 und die Stützrippen 32 in dem Bereich zwischen dem Stützring 33 und dem Anlagering 34 gegen die Innenseite 35 des zylindrischen Abschnitts 2 an und stützen sich dort radial ab. Der Anlagering 34 legt sich gegen den freien Rand des zylindrischen Abschnitts 2 des Standrohres 1, so daß die Führungsbuchse 6 gegen ein Hineinschieben in das Standrohr 1 gesichert und festgelegt ist. Im Bereich dieses freien Randes 36 sind am Standrohr 1 radial nach innen in Richtung auf die Achse 8 vorragende Vorsprünge 37 ausgebildet, die sich gegen den Stützring 33 legen und hierdurch ein Herausrutschen der Führungsbuchse 6 aus dem Standrohr 1 verhindern.

Die Innenbeschichtung 29 und die Außenbeschichtung 31 sind mittels über die Stirnseiten des Armierungsrings 28 gelegte Stirnschichten 38, 39 miteinander verbunden. Die Innenbeschichtung 29 mit den Führungsstegen 30, die Außenbeschichtung 31 mit den Sützrippen 32, dem Stützring 33 und dem Anlagering 34 und die Stirnschichten 38, 39 bestehen also aus einem Stück und sind in einem Arbeitsgang um den Armierungsring 28 gespritzt. Sie bestehen aus einem ausreichend stabilen Kunststoff mit guten Gleiteigenschaften gegenüber dem Stahl des Führungsrohres 4.

An den radial innenliegenden Seiten der Führungsstege 30 sind Führungsflächen 40 ausgebildet, die teilzylindrisch zur Achse 8 ausgebildet sind. Sie können durch spanabhebende Bearbeitung, beispielsweise durch Räumen, exakt auf einen Innen-Durchmesser g bearbeitet sein, der dem Durchmesser b gegebenenfalls zuzüglich eines geringfügigen Toleranzmaßes entspricht. Die radiale Dicke h der Innenbeschichtung 29 einschließlich der Führungsstege 30, also von der zugewandten Seite des Armierungsringes 28 bis zu den Führungsflächen 40 ist klein gegenüber der radialen Dicke i der Außenbeschichtung 31 von der zugeordneten Außenseite des Armierungsringes 28 bis zur Außenseite der Stützrippen 32 bzw. des Stützrings 33. Für das Verhältnis h zu i gilt 2 h ≦ i ≦ 10 h. Für das Verhältnis von h zu g gilt 15 h ≦ g ≦ 50 h. Absolut gilt für die radiale Dicke h 0,5 mm ≦ h ≦ 2,5 mm und bevorzugt 0,5 mm ≦ h ≦ 1,5 mm. Die Dicke h wird so Klein gemacht, wie es spritztechnisch möglich ist.

Durch die geschilderte Ausgestaltung der Führungbuchse 6 kann deren Außendurchmesser c bezogen auf den Innendurchmesser d des zylindrischen Abschnitts 2 des Standrohres 1 relativ grob bemessen sein. Er kann mit einem solchen Übermaß ausgebildet sein, daß er auf jeden Fall radial fest und damit wackelfrei an der Innenseite 35 anliegt. Da der Armierungsring 28 zwischen der Innenseite 35 des Standrohres 1 und den Führungsflächen 40 sich befindet, führen toleranzmaßbedingte Verformungen der Stützrippen 32 bzw. des Stützrings 33 nicht zu einer Verformung der Innenbeschichtung 29 mit den Führungsstegen 30 und insbesondere den Führungsflächen 40. Eventuelle derartige Verformungen werden durch die Kammern 41 aufgenommen, die zwischen den Stützrippen 32 ausgebildet sind. Die Lage der Führungsflächen 40 und damit deren Innendurchmesser g bleiben unverändert.

Wie insbesondere Fig. 2 erkennen läßt, ist die radiale Gesamtdicke k der Führungsbuchse 6, also die Dicke k von den Führungsflächen 40 bis zur Außenseite der Stützrippen 32 bzw. des Stützrings 33 deutlich größer als die radiale Dicke h der Innenbeschichtung 29. Es gilt 4 h ≦ k ≦ 8 h. Für das Verhältnis der Länge l des Armierungsringes 28 zur Länge L der Führungsbuchse 6 gilt 0,8 L ≦ l ≦ 0,95 L.

Als Längenverstellelement kann auch eine nur zu einem kleinen Teil mit Druckgas und zu einem größeren Teil mit Flüssigkeit gefüllte hydro-pneumatische Verstelleinrichtung eingesetzt werden. Dies gilt insbesondere deshalb, weil durch das Führungsrohr 4, das Standrohr 1 und die zusätzliche Druckfeder 12 eine sogenannte Tiefenfederung geschaffen wird, so daß die Gasfeder 5 selber nicht mehr bei fest eingestellter Länge federnd wirken muß.

## Patentansprüche

1. Führungsbuchse, insbesondere für längenverstellbare Stuhl-Säulen, die ein Standrohr (1) und ein konzentrisch zu einer gemeinsamen Mittel-Längs-Achse (8) in diesem radial geführtes und axial in diesem verschiebbares Rohr (Führungsrohr 4) aufweist, wobei die Führungsbuchse (6) mindestens eine radial innenliegende Führungsfläche (40) für das Rohr (Führungsrohr 4) und eine Außenfläche zur Anlage an der Innenseite (35) des Standrohres (1) aufweist, dadurch gekennzeichnet, daß die Führungsbuchse (6) mit einem Armierungsring (28) aus Metall versehen ist, daß die Führungsbuchse (6) mit einer die mindestens eine Führungsfläche (40) tragenden Innenbeschichtung (29) und einer gegen die Innenseite (35) des Standrohres (1) anliegenden Außenbeschichtung (31) versehen ist, daß die Innenbeschichtung (29) und die Außenbeschichtung (31) einstückig aus Kunststoff um den Armierungsrings (28) gespritzt sind und daß die radiale Dicke (h) der Innenbeschichtung (29) bezogen auf die radiale Gesamtdicke (k) der Führungsbuchse (6) klein ist.

2. Führungsbuchse nach Anspruch 1, dadurch gekennzeichnet, daß der Armierungsring (28) ringzylindrisch ausgebildet ist.

3. Führungsbuchse nach Anspruch 1 oder 2, dadurch gekennzeichnet, daß die axiale Länge (l) des Armierungsringes (28) nur unwesentlich Kleiner ist als die axiale Länge (L) der Führungsbuchse (6).

4. Führungsbuchse nach einem der Ansprüche 1 bis 3, dadurch gekennzeichnet, daß die Außenbeschichtung (31) mit Stützrippen (32) versehen ist, zwischen denen Kammern (41) ausgebildet sind.

5. Führungsbuchse nach einem der Ansprüche 1 bis 4, dadurch gekennzeichnet, daß die radiale Dicke (h) der Innenbeschichtung (29) klein ist im Verhältnis zur radialen Dicke (i) der Außenbeschichtung (31).

6. Führungsbuchse nach Anspruch 5, dadurch gekennzeichnet, daß für das Verhältnis von radialer Dicke (h) der Innenbeschichtung (29) zu der radialen Dicke (i) der Außenbeschichtung (31) gilt 2 h ≦ i ≦ 10 h.

7. Führungsbuchse nach einem der Ansprüche 1 bis 6, dadurch gekennzeichnet, daß für das Verhältnis von radialer Dicke (h) der Innenbeschichtung (29) zur radialen Gesamtdicke (k) der Führungsbuchse (6) gilt 4 h ≦ k ≦ 8 h.

8. Längenverstellbare Stuhl-Säule, die ein Standrohr (1) und ein konzentrisch zu einer gemeinsamen Mittel-Längs-Achse (8) in diesem mittels einer Führungsbüchse (6) radial geführtes und axial verschiebbares Rohr (Führungsrohr 4) aufweist, wobei die Führungsbuchse (6) mindestens eine radial innenliegende Führungsfläche (40) für das Rohr (Führungsrohr 4) und eine Außenfläche zur Anlage an der Innenseite (35) des Standrohres (1) aufweist, dadurch gekennzeichnet, daß die Führungsbuchse (6) mit einem Armierungsring (28) aus Metall versehen ist, daß die Führungsbuchse (6) mit einer die mindestens eine Führungsfläche (40) tragenden Innenbeschichtung (29) und einer gegen die Innenseite (35) des Standrohres (1) anliegenden Außenbeschichtung (31) versehen ist, daß die Innenbeschichtung (29) und die Außenbeschichtung (31) einstückig aus Kunststoff um den Armierungsrings (28) gespritzt sind und daß die radiale Dicke (h) der Innenbeschichtung (29) bezogen auf die radiale Gesamtdicke (k) der Führungsbuchse (6) klein ist.

9. Stuhl-Säule nach Anspruch 8, dadurch gekennzeichnet, daß der Armierungsring (28) ringzylindrisch ausgebildet ist.

10. Stuhl-Säule nach Anspruch 8 oder 9, dadurch gekennzeichnet, daß die axiale Länge (l) des Armierungsringes (28) nur unwesentlich kleiner ist als die axiale Länge (L) der Führungsbuchse (6).

11. Stuhl-Säule nach einem der Ansprüche 8 bis 10, dadurch gekennzeichnet, daß die Außenbeschichtung (31) mit Stützrippen (32) versehen ist, zwischen denen Kammern (41) ausgebildet sind.

12. Stuhl-Säule nach einem der Ansprüche 8 bis 11, dadurch gekennzeichnet, daß die radiale Dicke (h) der Innenbeschichtung (29) klein ist im Verhältnis zur radialen Dicke (i) der Außenbeschichtung (31).

13. Stuhl-Säule nach Anspruch 12, dadurch gekennzeichnet, daß für das Verhältnis von radialer Dicke (h) der Innenbeschichtung (29) zu der radialen Dicke (i) der Außenbeschichtung (31) gilt 2 h ≦ i ≦ 10 h.

14. Stuhl-Säule nach einem der Ansprüche 8 bis 13, dadurch gekennzeichnet, daß für das Verhältnis von radialer Dicke (h) der Innenbeschichtung (29) zur radialen Gesamtdicke (k) der Führungsbuchse (6) gilt 4 h ≦ k ≦ 8 h.
